# EUROPÄISCHE PATENTSCHRIFT

(11) **EP 0 420 029 B1**
(45) Veröffentlichungstag und Bekanntmachung des Hinweises auf die Patenterteilung: **15.12.1993**
(21) Anmeldenummer: 90118047.1
(22) Anmeldetag: 19.09.1990
(51) Int. Cl.: G02B 6/42, H01S 3/025

(54) **Einrichtung zur Umlenkung und Fokussierung eines Lichtstrahls**
Device for deflecting and focusing a light beam
Dispositif pour dévier et concentrer un faisceau de lumière

(30) Priorität: 29.09.1989 DE 3932653
(43) Veröffentlichungstag der Anmeldung: 03.04.1991
(73) Patentinhaber: SIEMENS AKTIENGESELLSCHAFT, 80333 München (DE)
(72) Erfinder: Stein, Karl-Ulrich, Dr., D-8025 Unterhaching (DE)

(56) Entgegenhaltungen:
- GB-A- 2 162 336
- US-A- 4 297 653
- US-A- 4 699 453
- US-A- 4 807 238
- IBM TECHNICAL DISCLOSURE BULLETIN, Band 20, Nr. 4, September 1977, Seiten 1606-1608, New York, US; L.D. COMERFORD et al.: "Offset laser to groove waveguide coupler"
- APPLIED PHYSICS LETTERS, Band 55, Nr. 11, 11. September 1989, Seiten 1053-1055, New York, US; T. TAKAMORI et al.: "Folded-cavity transverse junction stripe surface-emitting laser"

## Beschreibung

Eine Reihe von Lichtwellenleiter-Bauelementen verwendet eine Aufbau- und Gehäusetechnik, die es erfordert, einen optoelektronischen Wandlerchip, insbesondere einen Laserchip, senkrecht zur Ebene elektrischer "in-line"-Anschlüsse zu montieren, was mit großem Aufwand verbunden ist. Diese Gehäusetechnik ist aber besonders interessant für kostengünstige Bauelemente auf einer TO-ähnlichen Bodenplatte für faseroptische Verbindungen, die direkt in einen Faserstecker oder eine entsprechende Buchse eingebaut werden können.

Bei den heute bekannten Anordnungen werden Laserchips mit lateraler Strahlrichtung senkrecht zur Anschlußebene auf ein Podest montiert, die für die Fokussierung benötigte Kugellinse wird in einer mechanischen Fassung dazu justiert. In Entwicklung sind Laser mit zur Oberfläche senkrechter Strahlrichtung. Bei Detektoren werden planare Bauelemente verwendet, bei denen der Strahleinfall von Haus aus senkrecht zur Oberflache ist.

In der US 4 699 453 ist ein Koppler für Licht zwischen dem Ende einer optischen Faser und einem oder mehreren Detektor- oder Emitterelementen angegeben. Dieser Koppler ist aus formbarem Plastik und weist zur Umlenkung des Strahlenganges angeordnete Flächen zur Reflexion oder Totalreflexion auf. Für das Auskoppeln des Lichtes aus diesem Plastikkörper sind auch gewölbte und daher brechende Auskoppelflächen vorgesehen. Die Emitter, Detektoren und Glasfaserenden werden in geeignet geformten Aussparungen an den diversen Oberflächen dieses Plastikkörpers angeordnet.

Aufgabe der vorliegenden Erfindung ist es, eine einfach montierbare Anordnung für einen optoelektronischen Wandler und eine Fokussierungseinrichtung anzugeben, die der optischen Verbindung zwischen diesem Wandler und einem externen Wellenleiter, z. B. einer Faser, dient.

Diese Aufgabe wird mit der Anordnung mit den Merkmalen der Ansprüche 1 oder 2 gelöst. Weitere Ausgestaltungen ergeben sich aus den abhängigen Ansprüchen.

Die erfindungsgemäße Anordnung hat den Vorteil, daß sie zusammen mit einem optoelektrischen Wandlerchip, beispielsweise einem Laserchip oder Photodetektorchip, auf einer Bodenplatte montiert werden kann. Im Falle eines TO-Laser-Bauelements kann mit der erfindungsgemäßen Anordnung vorteilhafterweise der Laserstrahl in die für den Stecker geeignete Richtung gebracht und auf die richtige Stelle im Stecker fokussiert werden.

Die Verwendung eines Körpers aus Silizium hat den Vorteil, daß die optischen Umlenkflächen oder auch anderen optischen Flächen aus den Vorzugsflächen des Siliziumkristalls gewonnen werden können, wie sie zum Beispiel mit chemisch-anisotropem Ätzen freilegbar sind. Daneben können vorteilhafterweise auch polierte und isotrop geätzte Flächen Anwendung finden.

Eine erfindungsgemäße Anordnung mit einem integrierten Photodetektor hat den Vorteil, daß im Falle einer Sendeanordnung, beispielsweise eines Bauelementes mit Laserchip, durch den integrierten Photodetektor ein elektrisches Monitorsignal zur Regelung des Senders, beispielsweise des Laserstroms, verfügbar ist. Außerdem ist diese Anordnung vorteilhaft für eine Empfangsanordnung geeignet.

Die erfindungsgemäße Anordnung hat insbesondere den Vorteil, daß eine Schaltung zur Regelung eines Laserstroms mit dem Monitorsignal und ein Treiber für den Laser oder ein elektrischer Verstärker für den Photodetektor in die Anordnung mit integriert werden kann. Damit ist ein auf der elektrischen Seite voll mit den Logiksignalen kompatibler Wandler kostengünstig herstellbar.

Ein Photodetektor, beispielsweise der Photodetektor zur Erzeugung des Monitorsignals, ist vorzugsweise eine planare Diode, beispielsweise eine planare Diode nach dem Schottky-Barriere-Prinzip, die insbesondere auch an einen integrierten Wellenleiter gekoppelt sein kann. Derartige an einen integrierten Wellenleiter gekoppelte Dioden sind in der älteren deutschen Patentanmeldung P 39 00 422.8 vorgeschlagen. Von diesen vorgeschlagenen Dioden kommt jede als Photodetektor für die erfindungsgemäße Anordnung in Frage.

Der Körper aus Silizium der erfindungsgemäßen Anordnung kann aus einer üblichen polierten Si-Scheibe der Orientierung 100 hergestellt werden. Eine vorteilhafte Orientierung kann man nach dem Stand der Technik durch Sägen oder "fehlorientiertes" Ziehen erreichen.

Eine Umlenkfläche des Körpers aus Silizium kann auch durch eine metallisierte Fläche des Siliziumkristalls erhalten werden.

Der Körper aus Silizium trägt auch die Fokussierungseinrichtung. Vorzugsweise besteht diese Fokussierungseinrichtung aus einer Linse, die in einer vorzugsweise geätzten Vertiefung zur Justierung und Befestigung dieser Linse, die aus Saphir oder vorzugsweise aus Silizium bestehen kann, oder aus einer planaren Linse, beispielsweise einer Fresnellinse. Solche planare Linsen sind in der älteren deutschen Patentanmeldung P 38 33 096.2 vorgeschlagen. Bei Verwendung einer Linse aus Silizium kann dieses Material lokal mit einem Goldeutektikum oder Phosphorglas selbstjustierend in der Vertiefung befestigt werden.

Die Erfindung wird in der nachfolgenden Beschreibung anhand der Figuren beispielhaft näher erläutert. Es zeigen:
- Figur 1: in schematischer Darstellung und im Schnitt ein herkömmliches Lichtwellenleiter-Bauelement mit einem Faserstecker,
- Figur 2: eine Seitenansicht eines Ausführungsbeispiels einer erfindungsgemäßen Einrichtung für eine Sendeanordnung mit Bodenplatte, insbesondere für das Bauelement nach Figur 1,
- Figur 3: eine besondere Ausgestaltung des Ausführungsbeispiels nach Figur 2 in der gleichen Ansicht, und
- Figur 4: eine Seitenansicht eines Ausführungsbeispiels einer erfindungsgemäßen Einrichtung für eine Empfangsanordnung mit Bodenplatte.

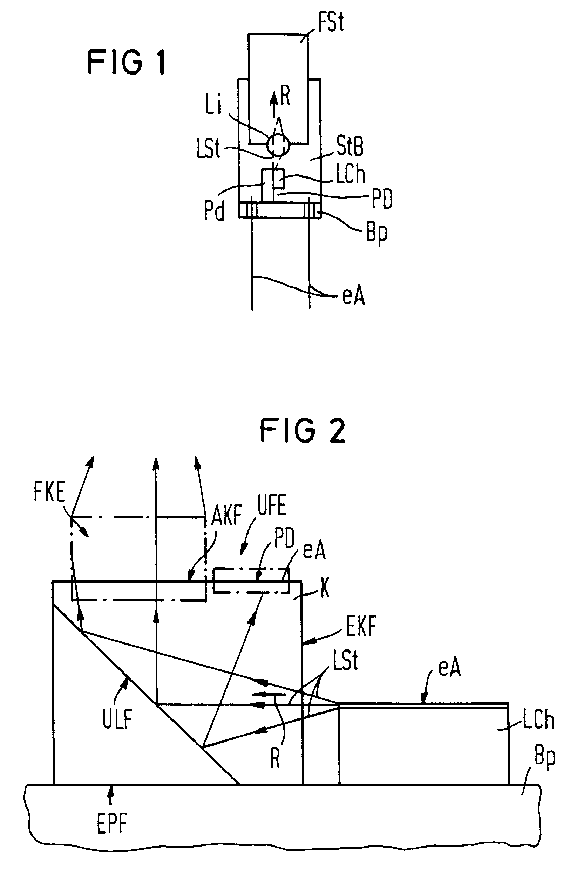

Das herkömmliche Lichtwellenleiter-Bauelement nach Figur 1 weist eine Steckerbuchse StB für einen Faserstecker FSt auf. Die Steckerbuchse StB weist eine Bodenplatte Bp mit elektrischen Anschlüssen eA auf. In der Steckerbuchse StB ist ein Laserchip LCh mit lateraler Strahlrichtung derart seitlich in einem auf der Bodenplatte Bp befestigten Podest Pd fixiert, daß die Strahlrichtung R in bezug auf die Zeichnung vertikal nach oben weist und der aus einem Laserstrahl bestehende Lichtstrahl LSt auf eine am oder im Faserstecker FSt befestigte Linse Li trifft, die ihn auf eine im Stecker FSt befestigte Faser fokussiert. Zwischen der Bodenplatte Bp und dem Laserchip LCh ist ein Photodetektor PD zur Erzeugung eines elektrischen Monitorsignals zur Regelung des Laserstroms an dem Podest Pd fixiert.

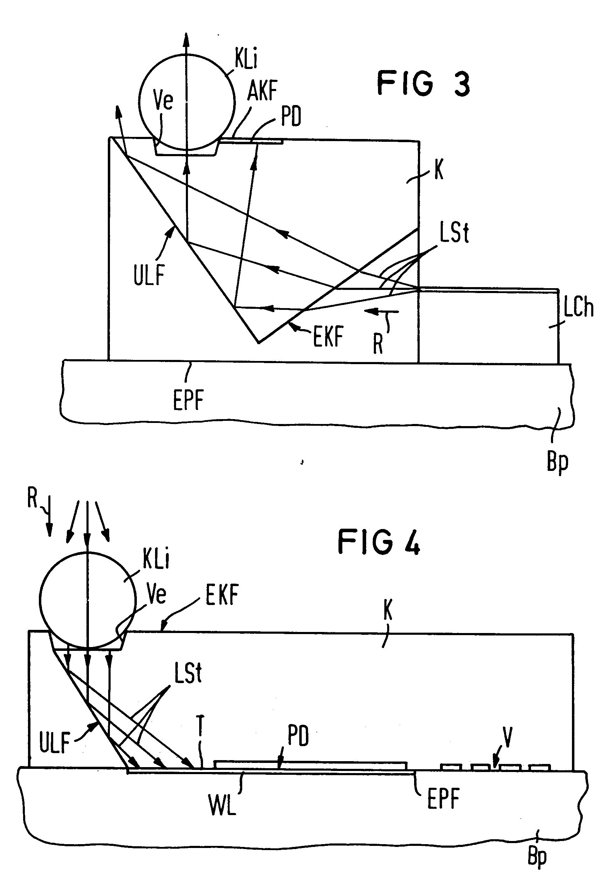

Die aus der Linse Li, dem Laserchip LCh, dem Photodetektor PD und dem Podest Pd bestehende Funktionseinheit des Bauelements nach Figur 1 ist erfindungsgemäß durch die aus dem Laserchip LCh und der Einrichtung UFE zur Umlenkung und Fokussierung eines Lichtstrahls nach Figur 2 oder 3 bestehenden Funktionseinheit ersetzt, die auf der Bodenplatte Bp befestigt ist.

Im Unterschied zur Funktionseinheit nach Figur 1 ist bei der erfindungsgemäßen Funktionseinheit nach Figur 2 oder Figur 3 der Laserchip LCh mit lateraler Strahlrichtung unmittelbar auf der Bodenplatte Bp befestigt, so daß die Strahlrichtung R in Bezug auf die Zeichnung im wesentlichen horizontal ist. Der in dieser horizontalen Richtung R abgestrahlte und den Lichtstrahl LSt bildende divergente Laserstrahl wird durch die Einrichtung UFE in Richtung vertikal nach oben umgelenkt und auf die Faser des Faserstreckers FSt fokussiert. Es können daher Faserstecker ohne Linse verwendet werden.

Die Einrichtung UFE besteht aus einem im Laserstrahl LSt angeordneten und auf der in der Zeichnung waagerechten Bodenplatte Bp befestigten Körper K aus Silizium, der eine optische Einkoppelfläche EKF zum Einkoppeln des Lichtstrahls LSt in den Körper K, eine optische Umlenkfläche ULF zum Umlenken des eingekoppelten Laserstrahls LSt vertikal nach oben, eine optische Auskoppelfläche AKF zum Auskoppeln des umgelenkten Laserstrahls LSt aus dem Körper K, und aus einer am Körper K befestigten oder ausgebildeten Fokussierungseinrichtung FKE zum Fokussieren des Lichtstrahls LSt.

Bei dem Beispiel nach Figur 2 ist die Einkoppelfläche EKF eine zur Bodenplatte Bp vertikale Seitenfläche des Körpers K, die dem Laserchip LCh zugekehrt ist. Die Umlenkfläche ULF ist eine schräg im Winkel zur Bodenplatte Bp angeordnete Fläche des Körpers K, die auf der von dem Laserchip LCh abgekehrten Seite des Körpers K angeordnet ist und die beispielsweise metallisiert und durch anisotropes Ätzen des Körpers K hergestellt sein kann. Die Auskoppelfläche AKF befindet sich auf der von der Bodenplatte Bp abgekehrten Seite des Körpers K. Auf dieser Seite ist auch die Fokussierungseinrichtung FKE auf dem Körper K angeordnet, unmittelbar neben der der Photodetektor PD auf dem Körper K integriert ist, der einen Anteil des der Fokussierungseinrichtung FKE zugeleiteten umgelenkten Lichtstrahls LSt empfängt und daraus das Monitorsignal zur Regelung des Laserstrahls erzeugt.

Das Beispiel nach Figur 3 unterscheidet sich von dem Beispiel nach Figur 2 dadurch, daß die Einkoppelfläche EKF schräg im Winkel zur Bodenplatte Bp und damit auch schräg zur Strahlrichtung R angeordnet ist und die Strahlumlenkung an der Umlenkfläche ULF durch Totalreflektion im Silizium erfolgt. Diese Einkoppelfläche EKF und diese Umlenkfläche ULF können bei geeigneter Orienteriung der kristallographischen Achsen des Siliziumkörpers durch anisotropes Ätzen hergestellt werden. Bei dem Beispiel nach Figur 3 kann der Laserchip LCh näher an den Körper K herangebracht werden.

Die aus der Linse Li, dem Laserchip LCh, dem Photodetektor PD und dem Podest Pd bestehende Funktionseinheit des Bauelements nach Figur 1 ist beim Ausführungsbeispiel nach Figur 4 erfindungsgemäß durch die aus der Einrichtung UFE zur Umwandlung und Fokussierung eines Lichtstrahls und dem Photodetektor PD bestehenden Funktionseinheit ersetzt. Dadurch ist eine Empfangsanordnung realisiert, bei welcher der Photodetektor PD den Empfangsdetektor bildet und ein Laserchip fehlt.

Im weiteren Unterschied zu den Beispielen nach den Figuren 2 und 3 ist bei dem Beispiel nach Figur 4 die Fokussierungseinrichtung FKE auf der Einkoppelfläche EKF des Körpers K angeordnet, die in diesem Beispiel von der Bodenplatte Bp abgekehrt ist, weil sie der Faser des Steckers FSt zugekehrt sein muß, um den daraus austretenden Lichtstrahl LSt zu empfangen. Der vertikal nach unten sich ausbreitende Lichtstrahl LSt wird durch die Einkoppelfläche EKF in den Körper K eingekoppelt, breitet sich in diesem aus und wird durch die Umlenkfläche ULF in Richtung einer weiteren Fläche EPF des Körpers K umgelenkt, an der der Photodetektor PD integriert ist, dem der umgelenkte Lichtstrahl zugeleitet ist. Die weitere Fläche EPF ist vorzugsweise eine auch bei den Beispielen nach den Figuren 2 und 3 vorhandene Bodenfläche des Körpers K, mit der dieser Körper K auf der Bodenplatte Bp aufliegt, wobei besonders in diesem Fall der Photodetektor PD eine planare Diode ist, die für eine "upside-down"-Montage besonders geeignet ist.

Insbesondere ist dafür eine an einen integrierten optischen Wellenleiter WL angekoppelte planare Diode geeignet, insbesondere eine Diode nach dem Schottky-Barriere-Prinzip, wobei dafür die Strukturen geeignet sind, die in der älteren Patentanmeldung P 39 00 422.8 vorgeschlagen sind.

Im Beispiel nach Figur 4 trifft das von der Umlenkfläche ULF umgelenkte Licht schräg auf den an der weiteren Fläche EPF integrierten Wellenleiter WL, wird in diesen eingekoppelt und in ihm zum Photodetektor PD, der an ihn angekoppelt ist. Um die Kapazität des Photodetektors PD gering zu halten, ist zwischen der Stelle, bei der das Licht in den Wellenleiter WL eingekoppelt wird und dem Photodetektor PD ein Taper T vorgesehen.

Vorzugsweise ist auf dem Körper K aus Silizium ein an den Photodetektor PD angeschlossener elektrischer Verstärker V integriert, beispielsweise ebenfalls an der weiteren Fläche EPF dieses Körpers K.

Die Fokussierungseinrichtung FKE kann bei allen Ausführungsbeispielen aus einer in der Vertiefung Ve befestigten Linse, beispielsweise einer Kugellinse KLi bestehen, so wie es in den Beispielen nach den Figuren 3 und 4 dargestellt ist oder mit einer planaren Linse realisiert sein, beispielsweise mit planaren Linsen, wie sie in der älteren Patentanmeldung P 38 33 096.2 vorgeschlagen worden sind.

## Patentansprüche

1. Einrichtung zur Umlenkung und Fokussierung eines Lichtsstrahls, bestehend aus einem optoelektronischen Sende-oder Empfangs-wandler (LCh;), einer Fokussierungseinrichtung (FKE) und einem Umlenkkörper (K), der in einem vorgegebenen Wellenlängenbereich lichtdurchlässig ist, der eine dem Wandler (LCh;) zugewandte Koppelfläche (EKF) und eine der Fokussierungseinrichtung (FKE) zugewandte Koppelfläche (AKF) sowie eine optische Umlenkfläche (ULF) aufweist, die so zwischen diesen Koppelflächen (EKF, AKF) angeordnet ist, daß ein sich in diesem Umlenkkörper (K) ausbreitender Lichtstrahl (LSt) von der Umlenkfläche zu einer der Koppelflächen hingelenkt wird,
**dadurch gekennzeichnet,**
daß der Umlenkkörper (K) aus Silizium besteht, daß eine Bodenplatte (Bp) vorgesehen ist, auf der der Umlenkkörper mit einer weiteren Fläche (EPF) befestigt ist,
daß der Wandler (LCh;) so angeordnet ist, daß seine Sende- bzw. Empfangsrichtung parallel zu der Bodenplatte verläuft und
daß die Fokussierungseinrichtung (FKE) an dem Umlenkkörper (K) auf seiner der Bodenplatte (Bp) gegenüberliegenden Seite angebracht ist.

2. Einrichtung zur Umlenkung und Fokussierung eines Lichtsstrahls, bestehend aus einem Fotodetektor (PD), einer Fokussierungseinrichtung und einem Umlenkkörper (K), der in einem vorgegebenen Wellenlängenbereich lichtdurchlässig ist, der eine dieser Fokussierungseinrichtung zugewandte Koppelfläche (EKF) und eine Umlenkfläche (ULF) aufweist dadurch gekennzeichnet, daß der Körper aus Silizium besteht, daß eine Bodenplatte (Bp) vorgesehen ist, auf der der Umlenkkörper mit einer weiteren Fläche (EPF) befestigt ist,
daß diese Koppelfläche (EKF) an der der weiteren Fläche gegenüberliegenden Seite des Körpers (K) angeordnet ist,
daß dieser Fotodetektor (PD) an dieser weiteren Fläche (EPF) in diesen Körper (K) integriert ist,
daß ein optischer Wellenleiter (WL) an der Bodenplatte (Bp) integriert und an den Fotodetektor (PD) angekoppelt ist und
daß dieser Wellenleiter (WL) und diese Umlenkfläche (ULF) so angeordnet sind, daß von der Fokussierungseinrichtung in den Körper (K) gelangendes Licht so an der Umlenkfläche (ULF) umgelenkt wird, daß es in diesen Wellenleiter (WL) eingekoppelt wird.

3. Anordnung nach Anspruch 1,
**dadurch gekennzeichnet**,
daß der Wandler ein Laserchip (LCH) oder ein Photodetektorchip ist, der auf der Bodenplatte (Bp) montiert ist.

4. Anordnung nach Anspruch 3,
**dadurch gekennzeichnet**,
daß die dem Wandler (LCh) zugewandte Koppelfläche (EKF) in einem Winkel schrag zur Strahlrichtung (R) des diese Koppelfläche (EKF) passierenden Lichtstrahls (LSt) angeordnet ist und die Umlenkung des im Körper (K) sich ausbreitenden Lichtstrahls (LSt) an der optischen Umlenkfläche (ULF) durch Totalreflexion im Silizium erfolgt.

5. Anordnung nach einem der Ansprüche 1 bis 3,
**dadurch gekennzeichnet**,
daß die Umlenkfläche (ULF) des Körpers (K) eine metallisierte Fläche des Siliziumkristalls ist.

6. Anordnung nach einem der Ansprüche 1 bis 5,
**dadurch gekennzeichnet**,
daß die Fokussierungseinrichtung (FKE) aus einer Linse (KLi) und einer Vertiefung (Ve) zur Justierung und Befestigung dieser Linse (KLi) besteht.

7. Anordnung nach einem der Ansprüche 1 bis 5,
**dadurch gekennzeichnet**,
daß die Fokussierungseinrichtung (FKE) aus einer planaren Linse besteht.

## Claims

1. Device for deflecting and focusing a light beam, comprising an optoelectronic transmission or reception transducer (LCh), a focusing device (FKE) and a deflecting member (K), which is light-transmitting in a predetermined wavelength range, which member exhibits a coupling surface (AKF) facing the transducer (LCh) and a coupling surface (EKF) facing the focusing device (FKE) as well as an optical deflecting surface (ULF), which is disposed between these coupling surfaces (EKF, AKF) so that a light beam (LSt) propagating in this deflecting member (K) is directed from the deflecting surface towards one of the coupling surfaces, characterized in that the deflecting member (K) comprises silicon, in that a baseplate (Bp) is provided, on which the deflecting member is secured by a further surface (EPF), in that the transducer (LCh) is disposed so that its transmission or reception direction extends parallel to the baseplate, and in that the focusing device (FKE) is attached to the deflecting member (K) on its side opposite the baseplate (Bp).

2. Device for deflecting and focusing a light beam, comprising a photodetector (PD), a focusing device and a deflecting member (K), which is light-transmitting in a predetermined wavelength range, which member exhibits a coupling surface (EKF) facing this focusing device and a deflecting surface (ULF), characterized in that the member comprises silicon, in that a baseplate (Bp) is provided, on which the deflecting member is secured by a further surface (EPF), in that this coupling surface (EKF) is disposed on that side of the member (K) which is opposite the further surface, in that this photodetector (PD) is integrated into this member (K) at this further surface (EPF), in that an optical waveguide (WL) is integrated on the baseplate (Bp) and coupled to the photodetector (PD), and in that this waveguide (WL) and this deflecting surface (ULF) are disposed so that light passing from the focusing device into the member (K) is deflected at the deflecting surface (ULF) so that it is coupled into this waveguide (WL).

3. Arrangement according to Claim 1, characterized in that the transducer is a laser chip (LCH) or a photodetector chip, which is mounted on the baseplate (Bp).

4. Arrangement according to Claim 3, characterized in that the coupling surface (EKF) facing the transducer (LCh) is disposed at an angle obliquely to the beam direction (R) of the light beam (LSt) passing through this coupling surface (EKF), and the deflection of the light beam (LSt) propagating in the member (K) takes place at the optical deflecting surface (ULF) by total reflection in silicon.

5. Arrangement according to one of Claims 1 to 3, characterized in that the deflecting surface (ULF) of the member (K) is a metallized surface of the silicon crystal.

6. Arrangement according to one of Claims 1 to 5, characterized in that the focusing device (FKE) comprises a lens (KLi) and a depression (Ve) for the adjustment and securing of this lens (KLi).

7. Arrangement according to one of Claims 1 to 5, characterized in that the focusing device (FKE) comprises a planar lens.

## Revendications

1. Dispositif pour faire dévier et focaliser un faisceau de lumière, constitué par un transducteur opto-électronique d'émission ou de réception (LCh), un dispositif de focalisation (FKE) et un corps de déviation (K), qui est transparent pour une gamme prédéterminée de longueurs d'onde et qui comporte une surface de couplage (EKF) tournée vers le transducteur (LCh) et une surface de couplage (AKF) tournée vers le dispositif de focalisation (FKE), ainsi qu'une surface optique de renvoi (ULF), qui est disposée entre ces surfaces de couplage (PKF, AKF) de telle sorte qu'un faisceau de lumière (LSe) qui se propage dans ce corps de déviation (K), est dirigé par la surface de renvoi en direction de l'une des surfaces de couplage,
caractérisé par le fait
que le corps de déviation (K) est réalisé en silicium,
qu'il est prévu une plaque de base (Bp), sur laquelle le corps de déviation est fixé au moyen d'une autre surface (EPF),
que le transducteur (LCh) est disposé de telle sorte que sa direction d'émission ou sa direction de réception est parallèle à la plaque de base, et
que le dispositif de focalisation (FKE) est monté sur le corps de déviation (K), sur sa face tournée à l'opposé de la plaque de base (Bp).

2. Dispositif pour faire dévier et focaliser un faisceau de lumière, constitué par un photodétecteur (PD), un disposiif de focalisation et un corps de déviation (K) qui est transparent pour la lumière dans une gamme prédéterminée de longueurs d'onde et qui possède une surface de couplage (EKF) tournée vers ce dispositif de focalisation et une surface de renvoi (ULF),
caractérisé par le fait
que le corps est formé de silicium, et
qu'il est prévu une plaque de base (Bp), sur laquelle le corps de déviation est fixé par une autre surface (EPF),
que cette surface de couplage (EKF) est disposée sur la face du corps (K) tournée à l'opposé de l'autre surface,
que ce photodétecteur (PD) est intégré au niveau de cette autre surface (EPF) dans ce corps (K),
qu'un guide d'ondes optiques (WL) est intégré dans la plaque de base (Bp) et est accouplé au photodétecteur (PD), et
que ce guide d'ondes (WL) et cette surface de renvoi (ULF) sont disposés de telle sorte qu'une lumière parvenant du dispositif de focalisation dans le corps (K) est déviée au niveau de la surface de renvoi (ULF) de telle sorte qu'elle est injectée dans ce guide d'ondes (WL).

3. Dispositif suivant la revendication 1, caractérisé par le fait que le transducteur est une microplaquette laser (LCH) ou une microplaquette de photodétecteur, qui est montée sur la plaque de base (Bp).

4. Dispositif suivant la revendication 3, caractérisé par le fait que la surface de couplage (EKF), tournée vers le transducteur (LCh) est disposée obliquement sous un certain angle par rapport à la direction (R) du faisceau de lumière (LSt) traversant cette surface de couplage (EKF) et que le renvoi du faisceau de lumière (LSt) se propageant dans le corps (K) au niveau de la surface optique de renvoi (ULF) s'effectue par réflexion totale dans le silicium.

5. Dispositif suivant l'une des revendications 1 à 3, caractérisé par le fait que la surface de renvoi (ULF) du corps (K) est une surface métallisée du cristal de silicium.

6. Dispositif suivant l'une des revendications 1 à 5, caractérisé par le fait que le dispositif de focalisation (FKE) est constitué par une lentille (KLi) et par un renfoncement ou cuvette (Ve) pour l'ajustement et la fixation de cette lentille (KLi);

7. Dispositif suivant l'une des revendications 1 à 5, caractérisé par le fait que le dispositif de focalisation (FKE) est constitué par une lentille planar.
